# EUROPEAN PATENT SPECIFICATION

(11) **EP 3 658 664 B1**
(45) Date of publication and mention of the grant of the patent: **28.07.2021**
(21) Application number: 18759428.8
(22) Date of filing: 25.07.2018
(51) Int. Cl.: C12G 1/00, C12G 3/06, C12G 3/07, C12H 1/00

(54) **METHOD TO ADD COMPOUNDS OF ENOLOGICAL INTEREST TO WINE AND ITS DISTILLATES**
VERFAHREN ZUR ZUGABE VON ÖNOLOGISCH INTERESSANTEN VERBINDUNGEN ZU WEIN UND SEINEN DESTILLATEN
MÉTHODE D'AJOUT DE COMPOSÉS D'INTÉRÊT ÉNOLOGIQUE AU VIN ET À SES DISTILLATS

(30) Priority: 26.07.2017 IT 201700085700
(43) Date of publication of application: 03.06.2020
(73) Proprietor: Ever S.R.L., 31100 Treviso (IT)
(72) Inventor: CAPRA, Paolo, 31020 Sernaglia Della Battaglia (IT)
(74) Representative: Petraz, Gilberto Luigi
(86) International application number: PCT/IT2018/050137
(87) International publication number: WO 2019/021331

(56) References cited:
- WO-A1-2017/095915
- WO-A2-2011/114331
- CN-A- 103 525 658
- CN-A- 105 112 191
- US-A1- 2003 110 951
- US-A1- 2008 199 585
- US-A1- 2010 092 636

## Description

### FIELD OF THE INVENTION

The invention is set out in the appended claims 1-9.

### BACKGROUND OF THE INVENTION

It is known that wine is naturally rich in bioactive compounds, and in particular tannins, which confer upon it a high reactivity of the oxidoreductive type and a considerable resistance to oxidation. These compounds, absorbed by man, increase the antioxidant activity of the cells, and in particular the ability to capture and inhibit oxidizing radicals, to prolong the half-life of red blood cells.

The tannins present in wine are mainly of proanthocyanidinic nature and derive from the maceration of grape skins, grape seeds and, to a lesser extent, from the stalks. Grapes contain this type of tannins in large quantities; but their concentration in wine varies according to the cultivar, the vintage and the intensity of the maceration process applied in the winery. This type of tannins is defined endogenous, because it originates directly from grapes and their components.

Because of their intrinsic antioxidant nature, beneficial for human health, proanthocyanins are the cause of considerable problems in the winemaking process. Their natural chemical instability leads them to react with each other and with the other components of the medium, generating self-oxidative or reductive phenomena toward the other constituent compounds of the wine. This leads to an organoleptic depreciation of the product which will manifest imperfections or olfactory defects proper, chromatic instability and deterioration of the tannic taste, with the appearance of dry and bitter hints. The damage caused to the wine is even higher the longer it is stored in a reducing environment. Stainless steel tanks, ideal for long-term cost-effectiveness and management of microbiological health, are very bad preservation receptacles that systematically induce unwanted reductive states, also known as "steel sickness". Although it is possible to construct the tanks that contain the wine of other materials (wood, concrete, terracotta, clay, fiberglass, glass), none of them currently provides sufficient guarantees of hygiene and cost containment as steel does, with which it is easy to make containers of any volumetric capacity.

In any case, the receptacle cannot be considered an effective and satisfactory solution, given that, as is obvious, it ensures a constant response that completely neglects the variability of concentration and reactivity of the bioactive molecules contained in wines. For these reasons enological research and practice has been oriented to look for molecules that would positively influence the reactions of the grape tannins, proanthocyanidinic, starting from a careful study of the compounds given up by wood, in particular oak. It was thus noted that wines preserved in wooden barrels were enriched in ellagitannins, also characterized by significant bioactivity.

The proanthocyanidinic tannins of grapes, often called endogenous, and ellagitannins of wood, often called exogenous, share some important chemical characteristics and therefore they are all included in the broader class of "tannins" even though they have a significantly different molecular structure.

The chemical properties of tannins are numerous, vary according to their structure and have numerous enological effects, among which we can mention the stabilization of color, organoleptic variations, antioxidant action, clarifying action and bacteriostatic action.

The stabilizing action on the color of the wine is obtained through the formation of stable complexes between the colored pigments and the tannins, which act with positive results both on the anthocyanins of red wines and on the flavonoids of white wines. The complexes that are formed preserve the coloring matter, preventing oxidation and consequent precipitation thereof.

With regard to the organoleptic properties, endogenous tannins have a natural tendency (bioactivity) to oxidize and polymerize, forming aggregates in colloidal structures different from the native one, present in grape cells. These structural modifications cause variations in the perceptions of taste, and the wines, from astringent and gingival as revealed in their native form, assume different, not implicitly positive, characteristics. In fact, it has been demonstrated that the conservation of wines in reducing environments induces the auto-oxidative reactions of proanthocyanidins, which entail a phenomenology identifiable with orange or brown colors, as well as a dry or rough taste, often accompanied by unpleasant bitter hints.

On the contrary, the aging of wines in the presence of exogenous tannins (of wood) allows different oxidation pathways, with higher red-ox potentials, which give rise to tertiary, three-dimensional structures more appreciated by the consumer and more consonant with modern tastes in food and wine. When the use of ellagitannins is combined with adequate oxygenation, the characteristic maintenance conditions of small-sized wooden receptacles are reproduced with greater managerial flexibility: the wines are more stable, less alterable by external oxidative events, with purple or straw yellow chromatic hints; the aromas express, without imperfections, the varieties of the grapes and the taste is soft and persistent, thanks to the managed attenuation of the native astringency.

Tannins, in particular those that can be hydrolyzed (exogenous) that are more reactive to oxygen, also play a role of natural antioxidant, which replaces and reinforces the preventive action of sulfur dioxide.

With regard to the clarifying action, the ability of tannins to complex proteins has been known for a long time and forms the basis of their astringent character. Their use as clarification aids allows to obtain an excellent efficacy in making the wine limpid while respecting its structure.

With regard to the anti-bacterial action, tannins reinforce the antimicrobial properties of sulfur dioxide, playing a role in inhibiting the growth of microorganisms.

The use of tannins is theoretically possible at every stage of winemaking. One of the indisputable advantages of using exogenous tannins is greater versatility, the possibility of dosing them according to the wine and the enological objectives, the promptness of use and action. In particular, during maceration, in the presence of grape skins when it is impossible or very expensive to use wood because it is disposable, an addition of tannins allows to effectively manage the polymerizations of endogenous tannins, it protects the anthocyanins from oxidation in the first extraction steps, immediately triggering positive polymerization reactions.

It is known that in enology a wide debate has developed on the use of wood as a container (barrels and barriques) or as a material to be immersed in steel tanks. As a presupposition and implicit postulate of these discussions, it was agreed unanimously that wines aged with wood are substantially different from those aged in steel or in another container, not only for the hints due to the toasting of the wood but also for their overall appearance (chromatic, olfactory, gustatory, after-taste). The similarity to barrique wines of wines obtained with wood in infusion is often such as to make them mutually confusing.

The use of alternatives to wood (staves, half staves, cubes of various shapes and thicknesses, chips) has also made it possible to use them even in the extremely early stages of winemaking, even on de-stemmed grapes. These innovative winemaking protocols allow to further minimize the auto-oxidation processes, further limiting the oxidative alteration common to all substances of plant origin transformed into liquid or semi-liquid form.

With the use of alternatives to wood, wine is enriched not only with ellagitannins but also with other substances, which are worthy of greater nutritional and enological attention, such as: aromatic compounds, aldehydes that promote the evolution of endogenous tannins, polysaccharides, products of combustion, common to roast meats, but potentially unhealthy if improperly concentrated.

In winery practice the most used wood alternatives are stave fragments or chips, preferably obtained from durmast, which are introduced in special infusion bags and then immersed in a container or tub containing the must or the wine to be processed.

This conventional method of static immersion of the wood in the wine takes quite some time for the desired compounds, that is, the aromatic substances, the tannins and the polysaccharides contained in the wood, to transfer in an appropriate concentration to the wine. In fact, the infusion times necessary for the purpose can vary from three weeks up to more than two months, and therefore the treatment of wine using the infusion method described above presupposes times that do not easily adapt to the response times, often very low, which the needs of the "just-in-time" market and the limitation of financial burdens impose on Companies that deal in significant volumes of wine.

WO-A-2011/114331 describes a method and apparatus to accelerate the production of aged fermented beverages, such as whisky, wine, vinegar or other products. This known method and apparatus provide a container in which a fermented liquid product is present in which wood chips are introduced. A vacuum pump system is provided, connected to the head air space above the liquid in the container, to control the vacuum air in the container itself. The fermented product introduced into the container is subjected to cycles of a vacuum that fluctuates between -1 bar and 0 bar, providing to reduce the pressure to extract substances from the wood chips and to transfer them to the fermented liquid product, aging the product and enriching it with additional organoleptic and color properties. The system described in WO-A-2011/114331 is based on the assumption that the pressure fluctuations caused by the vacuum pump, from a vacuum condition to an atmospheric pressure, continuously open and close the pores of the wood to extract the aromas. In particular, according to WO-A-2011/114331 the vacuum pump continuously depressurizes the container, opening the pores of the wood chips, starting the absorption of liquid into the wood chips. When the depressurization reaches -1.4 bar (-20 psi), a pressure probe closes the vacuum, releasing the pressure. This would force the pores of the wood chips to return to their original size, squeezing out the liquid. When the tank returns to normal pressure, the vacuum system is reactivated and the process continues until the aromas of the wood chips are extracted. However, this known system does not prove effective, in practice, in extracting not only the aromatic substances but also tannins and polysaccharides that Applicant has found to be distributed inside the wood or the plant substance in the thickness, also at different depths in the plant matrix. In fact, Applicant has found that the application of the vacuum proves to be completely ineffective for this purpose and the presumed effect of opening the pores, in a vacuum, and squeezing the pores when the pressure is brought back to normal atmospheric values, not only remains to be proven but also shows itself to have only a bland and absolutely insufficient effect to cause an intimate and deep contact of the liquid in the wood fiber or plant substance and therefore a satisfactory extraction of the compounds of enological interest, including not only aromatic substances, but also tannins and polysaccharides. US 2010/092636 A1 discloses a method for adding compounds of oenological interest, such as tannins and polysaccharides, the method comprising treating the wine contained in a container with wood pieces, such as chips, which are contained within a filtering bag, and pressurising it.

There is therefore a need to find an innovative technique able to optimize the extraction of compounds of enological interest from wood or other alternative plant substances, in order to transfer them to wine.

In particular, a first purpose of the present invention is to overcome the disadvantages correlated to conventional techniques for infusing chips and wood material in wine and making available the suitably enriched wine in a short time, in order to reduce the overall production costs, with particular reference to the loss of markets acquired due to the lack of reproducibility of the product, the inability to respond quickly to the needs of "just-in-time" markets and the summer and holiday seasonality of consumption.

Another purpose of the invention is to make available to the enological sector a solid-liquid extraction method able to extract, rapidly, reliably and selectively, the ellagitannins, polysaccharides and possibly the toasted aromatic fractions of wood and other plant substances, in order to process infusions with a high constancy of quality, available at every stage of the winemaking process.

The Applicant has devised, tested and embodied the present invention to overcome the shortcomings of the state of the art and to obtain these and other purposes and advantages.

### SUMMARY OF THE INVENTION

The present invention is set forth in the independent claims 1 and 9. The dependent claims are directed to particular embodiments.

Claim 1 is directed to a method for adding compounds of enological interest to wine or its distillates, said compounds of enological interest including aromatic substances, tannins, polysaccharides present inside a solid matrix based on wood and/or other plant substances and also located at different depths in the thickness of said solid matrix, the method comprising the following steps:
a) filling an extraction chamber with wine or its distillates to put them into contact with a filtering bag containing said solid matrix and therefore wood and/or other plant substances containing said compounds of enological interest;
b) pressurizing said extraction chamber and making it function at an operating pressure comprised between 6 and 9 bar;
c) depressurizing said extraction chamber making it function at an operating pressure comprised between 1 and 1.5 bar and carrying out through said extraction chamber a continuous recirculation of the wine or its distillates;
d) repeating in a cyclical manner the sequence of steps b) and c) for a total time comprised between 90 and 1,200 minutes;
e) extracting from said extraction chamber a liquid current comprising wine or its distillates enriched with said compounds of enological interest including aromatic substances, tannins, polysaccharides.

By compounds of enological interest, in the present description we mainly mean, as we said, aromatic substances, tannins and polysaccharides.

Advantageously, the pressurization step of the extraction chamber allows to force the penetration of the solvent, that is, the wine or its distillates, inside the wood fiber or plant substance; in this way the solvent can quickly and controllably solubilize the compounds of interest, in a homogeneous and repeatable manner. In particular, when the solvent is forced at the operating pressures indicated, it can reach great depths in the thickness of the wood or plant substance, solubilizing the compounds of interest that are typically distributed and present progressively from the outside toward the inside of the wood or plant substance.

Advantageously, the repetition of the pressurization/depressurization cycles of the extraction chamber allows to prevent the formation of concentration gradients and ensures a uniform extraction.

The derivatives or aromatic substances ("flavors") of the wood are numerous and their qualitative and quantitative distribution in the wood matrix is strongly influenced by the origin of the wood and its toasting methods, with particular reference to the temporal thermal curves. The method according to the present description allows the wine or its distillates (solvent) to enter deeply between the sheaves of wood, where the aromatic compounds are present in a higher concentration than in the external surface of the chip which is subject to the most violent heat treatments. Moreover, as with the other compounds described below, it is possible to design processing cycles intended to obtain infusions with an aromatic profile which is more appreciated by specific, targeted customers.

As explained in detail with reference to the state of the art, tannins are phenolic compounds (aromatic alcohols) widely diffused in many plants, and having numerous positive effects on wine: color stabilization, organoleptic properties, antioxidant action, clarifying action and bacteriostatic action. They are easily soluble compounds and can be extracted from the earliest stages of infusion. Therefore, it is possible to carry out short cycles to obtain infusions in wine with a higher degree of purity, greater extraction yield and reduced times using the equipment. This latter advantage not only entails better amortization of plant costs, but also makes it possible to apply infusion techniques in rapid production cycles, typical of wineries that process large volumes of wine.

Polysaccharides belong to the largest class of carbohydrates and wood polysaccharides are both structural, like cellulose, and also extractable and soluble, like the partly degraded hemicellulose complexes. These compounds are commonly found in plants and are positive for the quality of the wine: by increasing the content of polysaccharides, the organoleptic perception of the wine is improved, contributing to the sensations of body and volume in the mouth. They also contribute to the colloidal structure of the wine, encapsulating and protecting from oxidation the varietal aromas typical of grapes; in doing so they make the olfactory profile of the wines more stable and permanent.

The method according to the embodiments described here is based on an extraction technology to enrich wine or its distillates in a selective and reproducible manner, in a short time and with high yield in compounds of enological/food interest. Moreover, the process claimed in the present patent application allows to considerably reduce the time necessary for the oxido-reductive and chemical-physical stabilization of the wines.

Another advantage of the method according to the invention is that it surpasses conventional techniques of infusing chips of wood material in wine with an innovative technology, able to separate in a preset manner the extraction of the different compounds of enological interest contained in the wood to allow their specific use according to the enologist's technical objectives.

According to the invention, the transfer of the compounds of enological interest from the wood and/or other plant substances to the wine or its distillates is carried out in a specific extraction chamber, in a modified atmosphere free from oxidants, in which the extraction cycle provides an alternate working of the pressurized extraction chamber (step b) and working at atmospheric pressure or slightly higher (step c).

According to the invention, during step c) at an operating pressure between 1 and 1.5 bar, a continuous recirculation of the wine or its distillates is carried out through the extraction chamber.

Moreover, to maximize the absorption effects of the wine inside the material contained in the filtering bag and the subsequent release of the compounds of enological interest in the liquid phase containing wine or its distillates, the wood and/or plant substance is present in the filtering bag in crumbled form of granules and/or chip.

As will be explained in detail in the description of the attached drawings, during the step in which the extraction chamber is operated under pressure (step b) the wine effectively impregnates the wood or other plant material contained in the filtering bag, while the subsequent operating step at almost atmospheric pressure (step c) promotes the transfer by diffusion of the compounds of enological interest from the material contained in the filtering bag to the mass of wine.

The application of the method according to the embodiments described here is intended to enrich the wine or its distillates, and also wine-based beverages with substances of enological or nutraceutical interest, also as a function of the plant material subjected to extraction. As wine distillates to which the method described here can be effectively applied, we can cite, for example, brandy, cognac and grappa.

Also in the method according to the embodiments described here, the raw material preferably used to transfer the compounds of enological interest mentioned above to the wine is wood, preferably oak wood. However, as an alternative to wood, a different plant substance can also be used, in particular in a finely divided or crumbled form: this alternative plant substance can be chosen from wood-derived materials, vegetable fibers, fruit, woody seeds, berries, different woody essences, also herbaceous essences. These plant substances contain tannins, polysaccharides, molecules of nutraceutical interest in a concentration suitable for the purposes of the method according to the embodiments described here.

An advantageous aspect of the method according to the present description is that it is possible to generate calibration curves, based on an alcohol-based solvent whose properties are known, to be used to define the desired extraction, in terms of duration of treatment and therefore the amount of compounds of enological interest extracted, for a given wine or its distillates. In particular, the calibration curves are obtained after extraction, with a neutral and standard hydroalcoholic solution, of compounds of enological interest as described above, from a determinate plant substance, such as wood, wood chips or other as described above, the properties and contents of said compounds of enological interest being known.

The result of the extraction from said compounds of enological interest in the hydroalcoholic solvent is read for example with reference to the quantity of tannins and/or aromatic substances and/or polyphenols extracted and which are found in the solvent at the end of the extraction. Given the type of wood or plant substance, whose type and content of tannins and/or aromatic substances and/or polyphenols are known a priori, the extraction percentage or ratio is defined, generating the calibration curves.

The calibration curves can then be used to customize and define the desired extraction on the basis of the actual wine or its distillates which is subjected on each occasion to the method according to the present description.

In particular, the calibration curves are advantageous in that, since the wood or plant substance used is known, and taking into account the final modified result desired to be obtained for a given wine or its distillates, it is possible to intervene on the organoleptic properties of the wine or its distillates which is effectively subjected to the method, and to decide the duration of the treatment, and therefore the quantities of tannins and/or aromatic substances and/or polyphenols to be extracted, based on the desired final result to be obtained.

According to the invention, a plant is provided to add compounds of enological interest to wine or its distillates, which include aromatic substances, tannins, polysaccharides present inside a solid matrix based on wood and/or other plant substances with different depths in the thickness of the solid matrix. According to some embodiments, the plant comprises:
- a storage receptacle connected to a loading pump by means of an introduction line;
- an extraction chamber connected to the loading pump by means of a feed line; wherein the loading pump is configured to fill the extraction chamber with wine or its distillates in order to put them in contact with a filtering bag containing wood and/or other plant substances containing the compounds of enological interest;
- a compression piston connected to the feed line and configured to put the extraction chamber under pressure at an operating pressure comprised between 6 bar and 9 bar;
- an expansion chamber provided with a decompression piston and connected to the extraction chamber by means of a decompression line in order to selectively depressurize the extraction chamber at an operating pressure comprised between 1 bar and 1.5 bar;
- a valve unit to selectively put the extraction chamber in communication at least with the feed line or with the decompression line;
- a command and control unit configured to control at least the loading pump, the valve unit, the compression piston and the decompression piston in order to repeat in a cyclical manner a sequence of steps of pressurization and decompression of the extraction chamber for a total time comprised between 90 and 1,200;
- a recirculation pump connected on one side to the extraction chamber and on the other side to a recirculation line connected to the feed line, the command and control unit also being configured to control the recirculation pump to recirculate the treated wine in the extraction chamber during the decompression steps of the extraction chamber.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a block diagram of the sequence of the five operating steps necessary to implement the method according to embodiments described here;
- figs. 2a, 2b, 2c and 2d are views of possible plant layouts to implement the controlled infusion method for wine in accordance with embodiments described here;
- figs. 3a and 3b are graphs that show experimental test curves of the wetting trend, expressed in millimeters on the y-axis, with respect to pressure, expressed in bars on the x-axis, respectively for two different treatment times, 4 minutes (fig. 3a) and 12 minutes (fig. 3b).

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof.

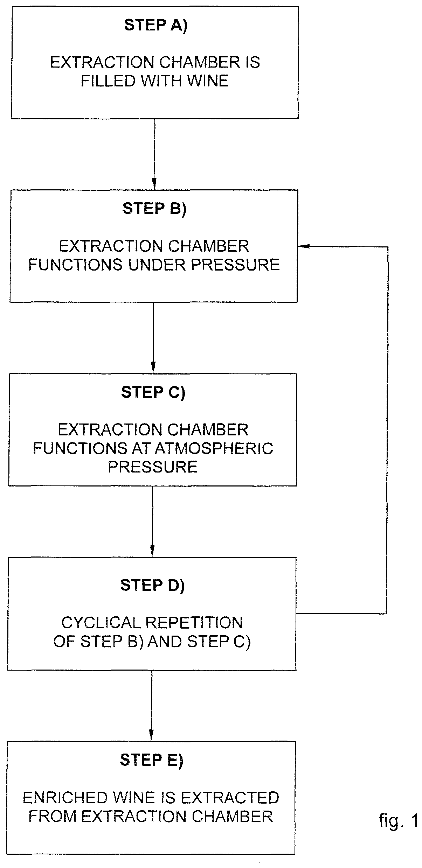

Fig. 1 is used to describe a block diagram of the sequence of the five operating steps of a method for adding compounds of enological interest to wine or its distillates. Here and in the present description, the term "compounds of enological interest" means at least aromatic substances, tannins and polysaccharides. In the block diagram of fig. 1, each block synthetically summarizes the main characteristic of each step of the process starting from step a) to the final step e). It should be noted that step d) involves a sequential cyclical repetition of steps b) and c) for a certain number of extraction cycles.

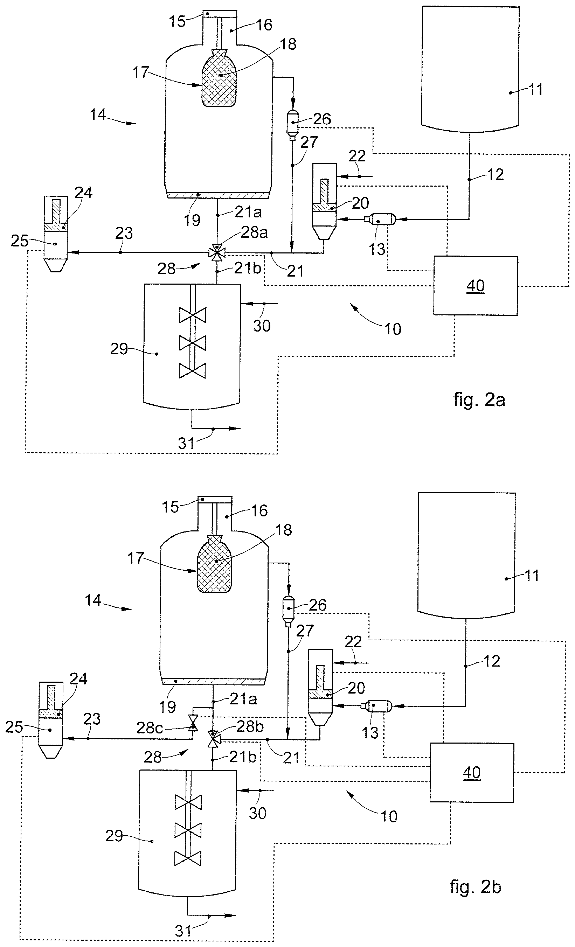

Figs. 2a and 2b are used to describe a view of a layout for a plant 10 for implementing the solid-liquid extraction method in accordance with the embodiments described here. Reference is made to the most interesting application, in which the liquid to be enriched is wine, while the solid matrix from which the desired compounds are extracted consists of wood. However, the method could also be applied to wine distillates, spirits (for example, whisky, rum or other) or other similar or comparable or derived alcoholic liquid substances (for example vinegar).

The wine to be subjected to the enrichment method is taken from a storage receptacle, or tank, 11 and is fed through an introduction line 12 to a loading pump 13, which can for example be a diaphragm pump.

The loading pump 13 provides, in particular, the hydraulic head necessary to feed the stream of wine inside an extraction chamber 14. In particular, the stream of wine is fed to the bottom part of the extraction chamber 14, which is gradually filled with liquid (step a).

The upper part of the extraction chamber 14 comprises a lid 15, which can be opened and closed manually, and an aperture 16 open toward the outside, through which it is possible to insert a filtering bag 17, or other suitable filtering container suitable for the purpose, containing inside it a solid matrix 18 from which the different compounds of enological interest are extracted. The solid matrix 18 is wood or other alternative plant substance, as described in more detail hereafter.

For example, filtering bags can be used with different degrees of filtration, for example 50 or 100 microns: after filling the filtering bag with the solid matrix 18, it is firmly closed and inserted inside the extraction chamber 14.

In the specific case given by way of non-restrictive example described using fig. 1, the solid matrix 18 consists of, or comprises, wood chips, advantageously oak, but other suitable plant substances can also be used. At the base of the extraction chamber 14, in possible embodiments, there is a filtering partition 19, which allows the liquid and the substances dissolved therein to pass, but blocks the passage of any solid residues.

For greater clarity, before proceeding further with the description of the embodiments using figs. 2a and 2b, we must repeat that the solid-liquid extraction method according to the invention described here provides the following steps:
a) filling the extraction chamber 14 with wine or its distillates to put them in contact with a filtering bag 17 containing a solid matrix 18 and therefore wood and/or other plant substance containing the compounds of enological interest;
b) pressurizing the extraction chamber 14 and making it function at an operating pressure comprised between 6 and 9 bar;
c) depressurizing the extraction chamber 14 making it function at an operating pressure comprised between 1 and 1.5 bar and carrying out through said extraction chamber (14) a continuous recirculation of the wine or its distillates;
d) cyclically repeating the sequence of steps b) and c) for a total time comprised between 90 and 1,200 minutes;
e) extracting from the extraction chamber 14 a liquid stream comprising wine enriched with the compounds of enological interest including aromatic substances, tannins, polysaccharides.

In some embodiments, during the filling of the extraction chamber 14, the filtering bag 17 containing the solid matrix 18, for example the wood chips, gradually comes into contact with the wine, which penetrates inside the filtering bag 17: this filling step a) of the extraction chamber 14 is carried out at atmospheric pressure, feeding the wine arriving from the storage receptacle 11 by means of the loading pump 13. There is a feed line 21 connected on one side to the loading pump 13 and on the other side to the extraction chamber 14, in particular on the bottom of the latter; in particular, there is a branch 21a of the feed line 21 which is in fluidic connection with the extraction chamber 14. The wine is fed by the loading pump into the extraction chamber 14, passing through the feed line 21.

Once the filling chamber 14 has been filled, it is closed and pressurized by the mechanical action of a compression piston 20, thrust by compressed air, which is positioned along the feed line 21 upstream of the extraction chamber 14 and, in this specific case, downstream of the loading pump 13. The compression piston 20 is configured to pressurize the wine in the extraction chamber 14 to a pressure between 6 bar and 9 bar.

In possible embodiments, along the feed line 21 a valve unit 28 is mounted which is used to manage and selectively divert the streams of wine and/or compressed air from and to the extraction chamber 14 and other operating units of the plant 10, as explained hereafter. The method according to embodiments described here then proceeds to step b), that is, the extraction chamber 14 is pressurized: compressed air is fed through the compressed air feed line 22 into the part above the compression piston 20, so that the piston moving downward causes a compression of the wine fed into the extraction chamber 14 through the feed line 21, keeping the valve unit 28 suitably open so that the compressed air goes to the extraction chamber 14. The operating pressure inside the extraction chamber 14 is increased, to a value between 6 and 9 bar.

Once the pre-set pressure value has been reached in the extraction chamber 14, the time necessary for establishing a pressure balance between the inside and the outside of the filtering bag 17 is allowed to pass: the temporal duration of step b) in which the extraction chamber 14 is kept under pressure between 6 bar and 9 bar can vary between 4 and 12 minutes.

Once step b) is completed, the wine contained in the extraction chamber 14 is depressurized by suitably activating the valve unit 28 to put the branch 21a of the feed line 21 connected to the extraction chamber 14 in communication with an expansion chamber 25. In this way, the working pressure is reduced from values between 6 bar and 9 bar to to atmospheric pressure, or in any case between 1 bar and 1.5 bar, by opening a decompression line 23 connected on one side to the valve unit 28, and at the end of which, on the other side, a decompression piston 24 is disposed, which operates in suction (passive piston) allowing the stream of wine to expand inside the expansion chamber 25 below the decompression piston 24.

The extraction chamber 14 is then made to function at a pressure close to atmospheric pressure, typically between 1 bar and 1.5 bar (step c), for a duration generally comprised between 8 and 15 minutes. During step c) of the method according to embodiments described here, the extraction from the solid matrix 18 of the desired compounds of enological interest is intensified: in fact, the extractable substances are transferred into the wine solvent thanks to a "suction" effect due to the gradient of negative pressure that has been created between the inside and the outside of the filtering bag 17.

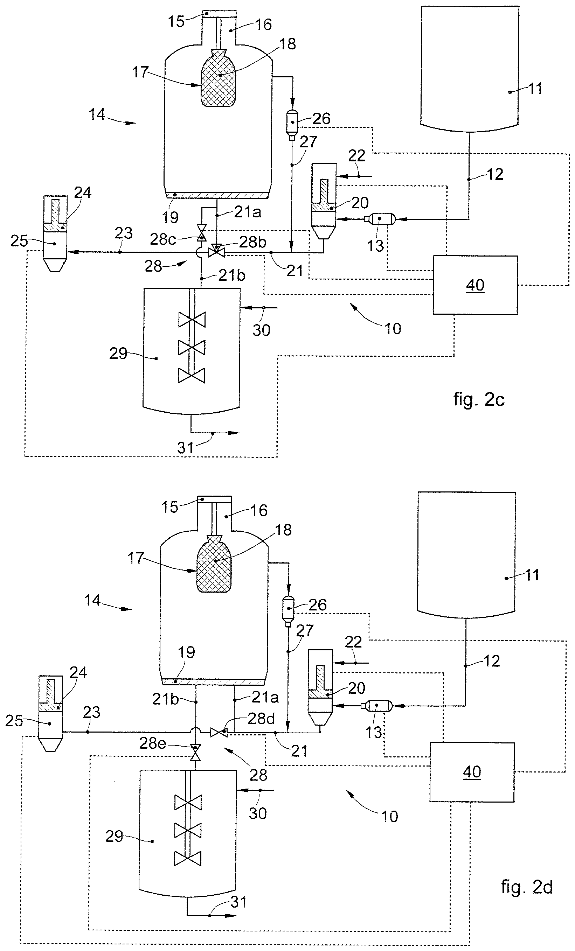

According to the invention, during step c) of the method in question the wine is continuously recirculated through the extraction chamber 14: as described using figs. 2a, 2b, 2c and 2d this continuous recirculation is carried out by means of a recirculation pump 26, connected on one side to the extraction chamber 14, for example to an upper zone thereof, and on the other side to a recirculation line 27 connected to the feed line 21. Therefore, a constant flow rate of wine is continuously extracted from the upper part of the extraction chamber 14 and sent by means of the recirculation pump 26 to the feed line 21 to be fed to the bottom of the extraction chamber 14.

The continuous recirculation of the solvent performed during step c) according to embodiments described here has the function of mixing the liquid present in the extraction chamber 14, thus preventing the formation of gradients of concentration of the compounds of enological interest in the immediate vicinity of the solid matrix 18 comprising the wood chips.

A sequence of step b) under pressure and step c) at atmospheric pressure can be defined as a single extraction cycle. Step d) according to the method described here provides to repeat several extraction cycles with a repeated sequence of steps b) and c) for a total time comprised between 90 and 1,200 minutes.

In order to obtain a satisfactory extraction yield during step d), it is possible to preferably carry out more than 8 extraction cycles, even more preferably comprised between 15 and 30 extraction cycles, so as to obtain a transfer of the compounds of enological interest from the wood chips to the wine according to the parameters set by the UV spectra detector that controls the process.

Finally, at the end of the repetition step d) the extraction chamber 14 is emptied and drained step e) using, for example, a stream of nitrogen, which is introduced from above in correspondence with the aperture 16 of the extraction chamber 14. Consequently, from the bottom of the extraction chamber 14 a liquid stream is discharged comprising wine enriched with the compounds of enological interest.

The residual wood material, that is, the solid matrix 18 present in the filtering bag 17, can be advantageously dried with air, in order to make it available for appropriate uses in the countryside or for use as a comburent.

The stream of wine to which compounds of enological interest have been added can optionally be sent, by suitably driving the valve unit 28, to a discharge branch 21b toward a receptacle 29, for example equipped with a mixer. A dilution of the treated wine with untreated wine can be advantageously carried out in the receptacle 29. For example, untreated wine, that is, wine not enriched with compounds of enological interest by means of the method according to the present description, can advantageously be fed into the receptacle 29 by means of another feed line 30.

The use of the receptacle 29 for purposes of dilution for example, can be useful for diluting the aromatic substances, tannins and polysaccharides to the desired concentrations. Consequently, after dilution, a stream of wine of suitable concentration in the compounds described above is extracted from the bottom of the receptacle 29 through a suitable discharge line 31.

In an embodiment, the valve unit 28 can comprise, for example, a multi-way valve 28a, in particular a four-way valve (see, for example, fig. 2a).

In an embodiment, the valve unit 28 can comprise, for example, a three-way valve unit 28b, to selectively connect the feed line 21, the branch 21a and the discharge branch 21b, and provided with another by-pass valve 28c to put the branch 21a in direct communication with the decompression line 23, selectively excluding the remaining parts of the feed circuit 21 (see fig. 2b for example).

In an embodiment, the valve unit 28 can comprise, for example, a three-way valve unit 28b to selectively connect the feed line 21, the branch 21a and the decompression line 23 and provided with another by-pass valve 28c mounted on the discharge branch 21b to put the discharge branch 21b in direct communication with the branch 21a, selectively excluding the remaining parts of the feed circuit 21 and of the decompression line 23 (see fig. 2c for example).

In an embodiment, the valve unit 28 can comprise, for example, a three-way valve unit 28d and a discharge valve 28e. In these embodiments, unlike in the embodiments described using figs. 2a, 2b and 2c, the discharge branch 21b can be a second independent pipe and not connected to the feed line 21 and to the decompression line 23, since it is directly connected on one side to the bottom of the extraction chamber 14 and on the other side to the dilution receptacle 29 and equipped with the discharge valve 28e. Furthermore, in these embodiments, a three-way valve unit 28d can be provided to selectively connect the feed line 21, the branch 21a and the decompression line 23 (see fig. 2d for example).

According to the invention, the plant 10 includes a command and control unit 40 configured to control at least the loading pump 13, the recirculation pump 26, the valve unit 28, the compression piston 20, the decompression piston 24 in order to repeat in a cyclical manner a sequence of steps of pressurization and decompression of the extraction chamber (14) for a total time comprised between 90 and 1,200 minutes.

With regard to the temperature, throughout the liquid-solid extraction method according to embodiments described here, this is suitably maintained in a range comprised between 15°C and 25°C. Although it has been observed that by increasing the operating temperature in the extraction chamber 14 an acceleration of the extraction of the polysaccharide compounds with respect to the tannins is obtained, it is preferred to operate at lower temperatures, both to maintain the nutraceutical value of the extract and also to facilitate the subdivision of the fractions of interest.

Without wanting to be bound by any specific theory in this regard, Applicant believes that, based on the extraction cycles carried out during the experimental tests, the following deductions and observations can be made:
A) The extraction of aromatic substances is concentrated in the very first extraction step (10-30 minutes) and it considerably weakens in all the following steps, even using very long extraction times;
B) The extraction of the tannins takes place during the first two hours of extraction, with a significant increase if the extracting solution is replaced, keeping the concentration of the extracts low;
C) The last fractions of extract (over 2 hours) have a considerably different composition from the first fractions: with high probability we can deduce that once the tannins have been extracted from the wood chips, when the extracting solution has penetrated well into the plant fibers thanks to percolation, the extraction of the plant polysaccharides from the chips is activated.

To sum up, compared to conventional techniques of infusing wooden chips in a container containing wine, the method to enrich wine or its distillates according to embodiments described here allows to obtain the following advantages:
1) it allows to extract the compounds of enological interest contained in the wood and/or other plant substance in considerably shorter times, compared to the conventional infusion techniques;
2) it creates specific work recipes, which can also be defined for each individual type of wine using specific laboratory tests and it standardizes the extraction of compounds of enological interest by constantly controlling the chemical characteristics of the extract.
3) it fractions the extraction of the different compounds of enological interest (aromatic substances, tannins, polysaccharides) contained in wood or other plant substance, to allow the specific use thereof according to the enologist's technical objectives (for example, to improve the bouquet, stabilize the color, improve the structure, sweetness and volume). To allow a clearer separation of the different fractions of extract, it is possible to operate on the different process parameters (ratio of solute/solvent volume, extraction times, operating pressure in step (b), extraction temperature) according to recipes defined for each individual plant matrix.

### EXPERIMENTAL DATA

Applicant has carried out experimental studies to analyze the pressurization step of the extraction chamber in the method according to the present description. In fact, one purpose of the pressurization is to force the penetration of the solvent (wine or its distillates) inside the wood fiber or plant substance used; in this way the solvent can quickly and controllably solubilize the compounds of interest which are distributed at different depths in the thickness of the wood or plant substance, in a homogeneous and repeatable manner.

The repetition of the pressurization/depressurization cycles of the chamber allows, as already specified, to prevent the formation of concentration gradients and to guarantee a uniform extraction.

Therefore, Applicant has concentrated his experimental efforts to empirically define an adequate ratio of pressure/percolation/recirculation times, in order to have the complete penetration of the solvent liquid (wine or its distillates), to have a recirculation thereof and to limit the total extraction times advantageously to 20 hours, in particular for the purposes of productivity, to carry out at least one extraction cycle per day.

In order to define the operating times and pressures, experimental tests have been carried out by Applicant to wet the wood, for example oak wood, measuring the degree of penetration, in millimeters, of the solvent (wine or its distillates) inside the thickness of some wooden blocks of different varieties and degree of toasting, operating for different times at different pressures.

We therefore proceeded to identify an optimal time interval, depending on the pressurization mechanism of the plant, comprised between 4 and 12 minutes.

Two series of tests were then carried out, taking into account the minimum and maximum pressurization time, minimum and maximum time of maintaining a gradually increasing superpressure inside the extraction chamber, using oak cubes measuring 30 x 30 x 7 mm.

The purpose of these further experimental tests was to evaluate the penetration, or wetting, of the liquid in the cross section, that is, in the thickness of the material, after having kept the solvent under pressure for the reference time. It was decided to work on a thickness of 7 mm because it represents an example of the average oak chips available on the market.

The maximum penetration of the solvent, considering that the fragment is affected on both sides, has therefore been considered as 3.5 mm.

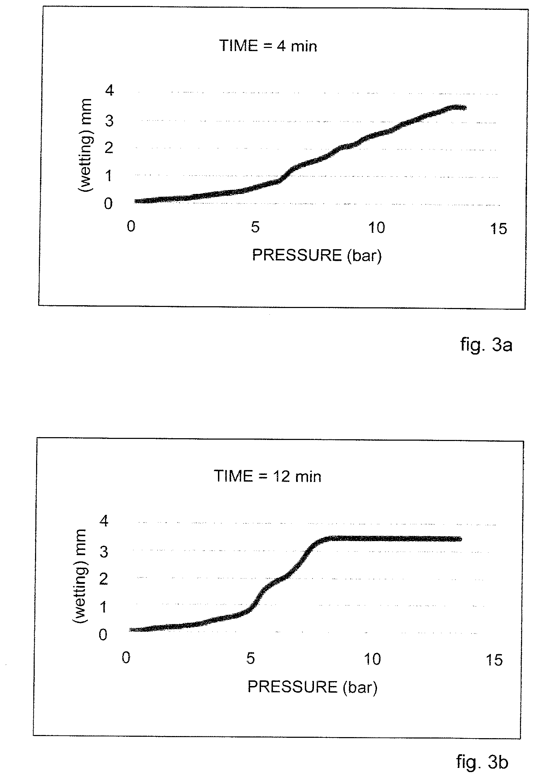

Figs. 3a and 3b show the average of the measurements carried out in the two series of tests: the y-axis shows the wetting, in mm and on the x-axis the pressure applied (in bar). In fig. 3a the pressurization time was 4 minutes, in fig. 3b it was 12 minutes.

The curves obtained and shown in figs. 3a and 3b show that preferably a pressure close to 8.5 bar is necessary to allow the complete penetration of the liquid inside the fiber, that is, a wetting of up to about 3.5 mm, if the pressure is maintained for a period of 4 minutes, while 6 bar can suffice if the time is extended to 12 minutes.

Applicant has therefore defined the operating pressure range of 6-9 bar specified above for the pressurization step. Applicant has also found that this pressure range represents an optimal compromise between extraction performance and the cost of the extraction chamber and the connected process.

Applicant has also found that, depending on the type of plant substance, alternative to wood, which might be used, its specific characteristics (for example species, degree of toasting, size of the fragments), the time available for the process and the compounds whose extraction is preferred, it is possible to modulate the parameters of the method described here inside the defined ranges of pressure and time.

## Claims

1. Method for adding compounds of enological interest to wine or its distillates, said compounds of enological interest including aromatic substances, tannins, polysaccharides present inside a solid matrix (18) based on wood and/or other plant substance and also located at different depths in the thickness of said solid matrix (18), the method comprising the following steps:
a) filling an extraction chamber (14) with wine or its distillates to put them into contact with a filtering bag (17) containing said solid matrix (18) and therefore wood and/or other plant substances containing said compounds of enological interest;
b) pressurizing said extraction chamber (14) and making it function at an operating pressure comprised between 6 and 9 bar;
c) depressurizing said extraction chamber (14), making it function at an operating pressure comprised between 1 and 1.5 bar and carrying out through said extraction chamber (14) a continuous recirculation of the wine or its distillates;
d) repeating in a cyclical manner the sequence of steps b) and c) for a total time comprised between 90 and 1,200 minutes;
e) extracting from said extraction chamber (14) a liquid current comprising wine or its distillates enriched with said compounds of enological interest including aromatic substances, tannins, polysaccharides.

2. Method as in any claim 1, **characterized in that** said plant substances containing compounds of enological interest is chosen from fruit, woody seeds and berries.

3. Method as in any claim hereinbefore, **characterized in that** said filtering bag (17) contains wood and/or vegetable substances in comminuted form of granules and/or chips.

4. Method as in any claim hereinbefore, **characterized in that** the pressurization of said extraction chamber (14) in said step b) is obtained by means of a compression piston (20) disposed upstream of said extraction chamber (14).

5. Method as in any claim hereinbefore, **characterized in that** the duration in time of said step b) varies between 4 and 12 minutes.

6. Method as in any claim hereinbefore, **characterized in that** the depressurization of said extraction chamber (14) in said step c) is obtained by means of a decompression piston (24) disposed downstream of said extraction chamber (14).

7. Method as in any claim hereinbefore, **characterized in that** the duration in time of said step c) varies between 8 and 15 minutes.

8. Method as in any claim hereinbefore, **characterized in that** the temperature in said extraction chamber (14) is comprised between 15° and 25°C.

9. Plant for adding compounds of enological interest to wine or its distillates, said compounds of enological interest including aromatic substances, tannins, polysaccharides present inside a solid matrix (18) based on wood and/or other plant substances and also located at different depths in the thickness of said solid matrix (18), said plant comprising:
- a storage receptacle (11) connected to a loading pump (13) by means of an introduction line (12);
- an extraction chamber (14) connected to said loading pump (13) by means of a feed line (21);
wherein said loading pump (13) is configured to fill said extraction chamber (14) with wine or its distillates in order to put them in contact with a filtering bag (17) containing wood and/or other plant substances containing said compounds of enological interest;
- a compression piston (20) connected to said feed line (21) and configured to put said extraction chamber (14) under pressure at an operating pressure comprised between 6 bar and 9 bar;
- an expansion chamber (25) provided with a decompression piston (24) and connected to said extraction chamber (25) by means of a decompression line (23) in order to selectively depressurize said extraction chamber (14) at an operating pressure comprised between 1 bar and 1.5 bar;
- a valve unit (28) to selectively put said extraction chamber (14) in communication at least with said feed line (21) or with said decompression line (23);
- a command and control unit (40) configured to control at least the loading pump (13), the valve unit (28), the compression piston (20) and the decompression piston (24) in order to repeat in a cyclical manner a sequence of steps of pressurization and decompression of the extraction chamber (14) for a total time comprised between 90 and 1,200 minutes; and
- a recirculation pump (26) connected on one side to the extraction chamber (14) and on the other side to a recirculation line (27) connected to the feed line (21), said command and control unit (40) also being configured to control said recirculation pump (26) to perform a recirculation of the wine treated in the extraction chamber (14) during the decompression steps of the extraction chamber (14).

## Patentansprüche

1. Verfahren zum Zufügen von Verbindungen von önologischem Interesse zu Wein oder seinen Destillaten, wobei besagte Verbindungen von önologischem Interesse aromatische Substanzen, Tannine, Polysaccharide aufweisen, welche innerhalb einer festen Matrix (18) basierend auf Holz und/oder anderer Pflanzensubstanz enthalten sind und auch in verschiedenen Tiefen in der Dicke von besagter fester Matrix (18) befindlich sind, wobei das Verfahren die folgenden Schritte aufweist:
a. Füllen einer Extraktionskammer (14) mit Wein oder seinen Destillaten, um diese in Kontakt mit einer Filtertasche (17) zu bringen, welche besagte feste Matrix (18) und deshalb Holz und/oder andere Pflanzensubstanzen aufweist, welche besagte Verbindungen von önologischem Interesse aufweisen,
b. unter-Druck-Setzen von besagter Extraktionskammer (14) und Betreiben dieser bei einem Betriebsdruck zwischen 6 und 9 bar,
c. Verringern des Drucks von besagter Extraktionskammer (14), wobei diese bei einem Betriebsdruck zwischen 1 und 1,5 bar betrieben wird und durch besagte Extraktionskammer (14) eine kontinuierliche Rezirkulation des Weins oder seiner Destillate durchgeführt wird,
d. Wiederholen auf eine zyklische Weise der Sequenz von Schritten b) und c) für eine Gesamtzeit zwischen 90 und 1.200 Minuten,
e. Extrahieren von besagter Extraktionskammer (14) eines Flüssigkeitsstroms, welcher Wein oder seine Destillate aufweist, welche mit besagten Verbindungen von önologischem Interesse, welche aromatische Substanzen, Tannine, Polysaccharide aufweisen, angereichert sind.

2. Verfahren gemäß Anspruch 1, **dadurch gekennzeichnet, dass** besagte Pflanzensubstanzen, welche Verbindungen von önologischem Interesse aufweisen, ausgewählt sind aus Früchten, Gehölzsamen und Beeren.

3. Verfahren gemäß irgendeinem der vorangegangenen Ansprüche, **dadurch gekennzeichnet, dass** besagte Filtertasche (17) Holz und/oder Pflanzenstoffe in zerkleinerter Form von Granulat und/oder Stückchen aufweist.

4. Verfahren gemäß irgendeinem der vorangegangenen Ansprüche, **dadurch gekennzeichnet, dass** das unter-Druck-Setzen von besagter Extraktionskammer (14) in besagtem Schritt b. erreicht wird mittels eines Kompressionskolbens (20), welcher stromaufwärts von besagter Extraktionskammer (14) angeordnet ist.

5. Verfahren gemäß irgendeinem der vorangegangenen Ansprüche, **dadurch gekennzeichnet, dass** die Zeitdauer von besagtem Schritt b. zwischen 4 und 12 Minuten variiert.

6. Verfahren gemäß irgendeinem der vorangegangenen Ansprüche, **dadurch gekennzeichnet, dass** das Verringern des Drucks von besagter Extraktionskammer (14) in Schritt c. erreicht wird mittels eines Dekompressionskolbens (24), welcher stromabwärts von besagter Extraktionskammer (14) angeordnet ist.

7. Verfahren gemäß irgendeinem der vorangegangenen Ansprüche, **dadurch gekennzeichnet, dass** die Zeitdauer von besagtem Schritt c. zwischen 8 und 15 Minuten variiert.

8. Verfahren gemäß irgendeinem der vorangegangenen Ansprüche, **dadurch gekennzeichnet, dass** die Temperatur in besagter Extraktionskammer (14) zwischen 15° und 25°C liegt.

9. Anlage zum Zufügen von Verbindungen von önologischem Interesse zu Wein oder seinen Destillaten, wobei besagte Verbindungen von önologischem Interesse aromatische Substanzen, Tannine, Polysaccharide aufweisen, welche innerhalb einer festen Matrix (18) basierend auf Holz und/oder anderen Pflanzensubstanzen vorliegen und auch in verschiedenen Tiefen in der Dicke von besagter fester Matrix (18) befindlich sind, wobei besagte Anlage aufweist:
- ein Lagerbehältnis (11), welches mit einer Ladepumpe (13) mittels einer Einführungsleitung (12) verbunden ist,
- eine Extraktionskammer (14), welche mit besagter Ladepumpe (13) mittels einer Speiseleitung (21) verbunden ist,
wobei besagte Ladepumpe (13) dazu konfiguriert ist, besagte Extraktionskammer (14) mit Wein oder seinen Destillaten zu füllen, um sie in Kontakt mit einer Filtertasche (17) zu bringen, welche Holz und/oder andere Pflanzensubstanzen aufweist, die besagte Verbindungen von önologischem Interesse aufweisen,
- einen Kompressionskolben (20), welcher mit besagter Speiseleitung (21) verbunden ist und dazu konfiguriert ist, besagte Extraktionskammer (14) bei einem Betriebsdruck zwischen 6 bar und 9 bar unter Druck zu setzen,
- eine Expansionskammer (25), welche mit einem Dekompressionskolben (24) bereitgestellt und mit besagter Extraktionskammer (25) mittels einer Dekompressionsleitung (23) verbunden ist, um den Druck besagter Extraktionskammer (14) selektiv auf einen Betriebsdruck zwischen 1 bar und 1,5 bar zu verringern,
- eine Ventileinheit (28), um besagte Extraktionskammer (14) selektiv wenigstens mit besagter Speiseleitung (21) oder mit besagter Dekompressionsleitung (23) in Verbindung zu setzen,
- eine Befehls- und Steuereinheit (40), welche dazu konfiguriert ist, wenigstens die Ladepumpe (13), die Ventileinheit (28), den Kompressionskolben (20) und den Dekompressionskolben (24) zu steuern, um auf eine zyklische Weise eine Sequenz von Schritten des unter-Druck-Setzens und der Verringerns des Drucks der Extraktionskammer (14) für eine Gesamtzeit zwischen 90 und 1.200 Minuten zu wiederholen, und
- eine Rezirkulationspumpe (26), welche verbunden ist auf einer Seite mit der Extraktionskammer (14) und auf der anderen Seite mit einer Rezirkulationsleitung (27), welche mit der Speiseleitung (21) verbunden ist, wobei besagte Befehls- und Steuereinheit (40) auch dazu konfiguriert ist, besagte Rezirkulationspumpe (26) zu steuern, um eine Rezirkulation des in der Extraktionskammer (14) behandelten Weins während den Schritten des Verringerns des Drucks der Extraktionskammer (14) durchzuführen.

## Revendications

1. Procédé pour ajouter des composés d'intérêt énologique au vin ou à ses distillats, lesdits composés d'intérêt énologique comprenant des substances aromatiques, des tanins, des polysaccharides présents à l'intérieur d'une matrice solide (18) à base de bois et/ou d'une autre substance végétale et également situés à différentes profondeurs dans l'épaisseur de ladite matrice solide (18), le procédé comprenant les étapes consistant à :
a) remplir une chambre d'extraction (14) de vin ou de ses distillats pour les mettre en contact avec un sac filtrant (17) contenant ladite matrice solide (18) et donc du bois et/ou d'autres substances végétales contenant lesdits composés d'intérêt énologique ;
b) pressuriser ladite chambre d'extraction (14) et la faire fonctionner à une pression de fonctionnement comprise entre 6 et 9 bars ;
c) dépressuriser ladite chambre d'extraction (14), la faire fonctionner à une pression de fonctionnement comprise entre 1 et 1,5 bars et effectuer à travers ladite chambre d'extraction (14) une recirculation continue du vin ou de ses distillats ;
d) répéter de manière cyclique la séquence des étapes b) et c) pendant une durée totale comprise entre 90 et 1 200 minutes ;
e) extraire de ladite chambre d'extraction (14) un courant liquide comprenant du vin ou ses distillats enrichis avec lesdits composés d'intérêt énologique comprenant des substances aromatiques, des tanins, des polysaccharides.

2. Procédé selon l'une quelconque des revendications 1, **caractérisé en ce que** lesdites substances végétales contenant des composés d'intérêt énologique sont choisies parmi les fruits, les graines ligneuses et les baies.

3. Procédé selon l'une quelconque des revendications précédentes, **caractérisé en ce que** ledit sac filtrant (17) contient du bois et/ou des substances végétales sous forme de granulés et/ou de copeaux broyés.

4. Procédé selon l'une quelconque des revendications précédentes, **caractérisé en ce que** la pressurisation de ladite chambre d'extraction (14) dans ladite étape b) est obtenue au moyen d'un piston de compression (20) disposé en amont de ladite chambre d'extraction (14).

5. Procédé selon l'une quelconque des revendications précédentes, **caractérisé en ce que** la durée dans le temps de ladite étape b) varie entre 4 et 12 minutes.

6. Procédé selon l'une quelconque des revendications précédentes, **caractérisé en ce que** la dépressurisation de ladite chambre d'extraction (14) dans ladite étape c) est obtenue au moyen d'un piston de décompression (24) disposé en aval de ladite chambre d'extraction (14).

7. Procédé selon l'une quelconque des revendications précédentes, **caractérisé en ce que** la durée dans le temps de ladite étape c) varie entre 8 et 15 minutes.

8. Procédé selon l'une quelconque des revendications précédentes, **caractérisé en ce que** la température dans ladite chambre d'extraction (14) est comprise entre 15° et 25°C.

9. Installation pour ajouter des composés d'intérêt énologique au vin ou à ses distillats, lesdits composés d'intérêt énologique comprenant des substances aromatiques, des tanins, des polysaccharides présents à l'intérieur d'une matrice solide (18) à base de bois et/ou d'autres substances végétales et également situés à différentes profondeurs dans l'épaisseur de ladite matrice solide (18), ladite installation comprenant :
- un récipient de stockage (11) relié à une pompe de chargement (13) au moyen d'une conduite d'introduction (12) ;
- une chambre d'extraction (14) reliée à ladite pompe de chargement (13) au moyen d'une conduite d'alimentation (21) ;
dans lequel ladite pompe de chargement (13) est configurée pour remplir ladite chambre d'extraction (14) avec du vin ou ses distillats afin de les mettre en contact avec un sac filtrant (17) contenant du bois et/ou d'autres substances végétales contenant lesdits composés d'intérêt énologique ;
- un piston de compression (20) relié à ladite conduite d'alimentation (21) et configuré pour mettre ladite chambre d'extraction (14) sous pression à une pression de fonctionnement comprise entre 6 bars et 9 bars ;
- une chambre de détente (25) pourvue d'un piston de décompression (24) et reliée à ladite chambre d'extraction (25) au moyen d'une conduite de décompression (23) afin de dépressuriser sélectivement ladite chambre d'extraction (14) à une pression de fonctionnement comprise entre 1 bar et 1,5 bars ;
- une unité de soupape (28) pour mettre sélectivement ladite chambre d'extraction (14) en communication au moins avec ladite conduite d'alimentation (21) ou avec ladite conduite de décompression (23) ;
- une unité de commande et d'instruction (40) configurée pour commander au moins la pompe de chargement (13), l'unité de soupape (28), le piston de compression (20) et le piston de décompression (24) afin de répéter de manière cyclique une séquence d'étapes de pressurisation et de décompression de la chambre d'extraction (14) pendant une durée totale comprise entre 90 et 1 200 minutes ; et
- une pompe de recirculation (26) connectée d'un côté à la chambre d'extraction (14) et de l'autre côté à une conduite de recirculation (27) connectée à la ligne d'alimentation (21), ladite unité de commande et d'instruction (40) étant également configurée pour commander ladite pompe de recirculation (26) pour effectuer une recirculation du vin traité dans la chambre d'extraction (14) pendant les étapes de décompression de la chambre d'extraction (14).
